# EUROPEAN PATENT SPECIFICATION

(11) **EP 2 848 084 B1**
(45) Date of publication and mention of the grant of the patent: **26.09.2018**
(21) Application number: 12875015.5
(22) Date of filing: 23.04.2012
(51) Int. Cl.: H04W 84/20, H04W 88/02, H04W 4/00

(54) **SYSTEMS AND METHODS FOR RESUMING GROUP OWNER RESPONSIBILITIES FOR PEER-TO-PEER WIRELESS CONNECTIONS**
SYSTEME UND VERFAHREN ZUR WIEDERAUFNAHME VON GRUPPENBESITZERVERANTWORTUNGEN FÜR DRAHTLOSE PEER-TO-PEER-VERBINDUNGEN
SYSTÈMES ET PROCÉDÉS DE REPRISE DE RESPONSABILITÉS DE PROPRIÉTAIRE DE GROUPE POUR DES CONNEXIONS SANS FIL D'ÉGAL-À-ÉGAL

(43) Date of publication of application: 18.03.2015
(73) Proprietor: Intel Corporation, Santa Clara, CA 95054 (US)
(72) Inventor: QI, Emily, Portland, Oregon 97229 (US); KAHN, Raan, 42920 Haifa (IL)
(74) Representative: HGF Limited
(86) International application number: PCT/US2012/034642
(87) International publication number: WO 2013/162496

(56) References cited:
- EP-A2- 2 519 071
- US-A1- 2004 039 781
- US-A1- 2005 075 084
- US-A1- 2008 168 182
- US-B1- 7 788 522
- WI-FI ALLIANCE: "Wi-Fi Peer-to-Peer (P2P) Technical Specification v1.1", WI-FI ALLIANCE SPECIFICATION,, 1 January 2010 (2010-01-01), pages 1-159, XP009163866,

## Description

### TECHNICAL FIELD

This disclosure generally relates to systems and methods for implementing peer-to-peer wireless network connections.

### BACKGROUND

The use of mobile devices has become widespread and the need to network or communicate between mobile devices that are in close proximity to each other has increased. Several methods are available to facilitate mobile device networking and the networking of mobile devices to other nearby non-mobile devices. Peer-to-peer wireless networks include several devices connected to each other, in which each device may operate as a client or server for other devices in the network. The devices may share information and share resources to accomplish tasks over a wireless network that allows, in theory, any of the devices to operate as an access point for the wireless network.

However, the mobility of hand-held devices provides a dilemma for peer-to-peer networks. The mobile devices may share resources and delegate tasks to efficiently share information or perform tasks. However, the devices themselves are likely to leave the network due to the relatively short range of the wireless connection and their ability to move outside the range of the wireless connection, either voluntarily or involuntarily. As a result, as the peer-to-peer network loses devices, the network must be restarted and reformed to continue operating causing delay and loss of information.

US 2005/0075084 describes a method and system for supporting residual energy awareness in an ad-hoc wireless communications network.

### SUMMARY

The invention is set out in the appended set of claims. The embodiments and/or examples of the following description which are not covered by the appended claims are considered as not being part of the present invention.

### BRIEF DESCRIPTION OF THE FIGURES

The features within the drawings are numbered and are cross-referenced with the written description. Generally, the first numeral reflects the drawing number where the feature was first introduced, and the remaining numerals are intended to distinguish the feature from the other notated features within that drawing. However, if a feature is used across several drawings, the number used to identify the feature in the drawing where the feature first appeared will be used. Reference will now be made to the accompanying drawings, which are not necessarily drawn to scale and wherein:
FIG. 1 is a simplified block diagram of a representative environment of a peer-to-peer wireless network including a group owner device that manages the network with the group member devices.
FIG. 2 is a flow diagram illustrating an exemplary method for a group owner device to determine a succession plan for a peer-to-peer wireless network.
FIG. 3 is a flow diagram illustrating an exemplary method for a group member device to implement a succession plan due to the voluntary departure of the group owner from a peer-to-peer wireless network.
FIG. 4 is a flow diagram illustrating an exemplary method for a group member device to implement a succession plan due to the involuntary departure of the group owner from a peer-to-peer wireless network.
FIG. 5 is a flow diagram illustrating an exemplary method for a group owner device to reestablish a group owner role of a peer-to-peer wireless network, following the group owner's departure from the peer-to peer network.
FIG. 6 is a flow diagram illustrating an exemplary method for determining a succession plan for a group owner of a peer-to-peer wireless network.
FIG. 7 is a flow diagram illustrating an exemplary method for implementing a succession plan due to the voluntary departure of a group owner from a peer-to-peer wireless network.
FIG. 8 is a flow diagram illustrating an exemplary method for implementing a succession plan due to the involuntary departure of a group owner from a peer-to-peer wireless network.
FIG. 9 is a flow diagram illustrating an exemplary method for reestablishing a group owner of a peer-to-peer wireless network, following the group owner's departure from the network.
FIG. 10 is a flow diagram illustrating an exemplary method for implementing a succession plan due to the involuntary departure of one or more devices from a peer-to-peer wireless network.

### DETAILED DESCRIPTION OF EMBODIMENTS OF THE INVENTION

Embodiments of the invention are described more fully hereinafter with reference to the accompanying drawings, in which embodiments of the disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art.

Embodiments described in this disclosure may provide systems, methods, and apparatus for implementing a succession plan between a group of devices that form a peer-to-peer wireless network. Due to the mobile nature of hand-held devices and the relatively short range of their Wi-Fi wireless capability the group; members may easily leave the network, either voluntarily or involuntarily.

In one aspect of peer-to-peer networking, a group owner for the network acts as the access point for the other group members. The group owner enables information sharing between the group members and may host applications for the group members to use together or for collaboration in a common environment. Typically, if the group owner leaves or loses contact with the group members, the peer-to-peer network has to be restarted and reformed resulting in an interrupted user experience. The interruption may cause delay and loss of information as the group members attempt to reestablish the peer-to-peer network and re-synchronize their activities. For example, if the group owner hosting a gaming environment leaves the group, the group has to restart and reform the network around a new group owner that may host the gaming environment. In another example, the group is engaged in a meeting and viewing slides hosted by the group owner. If the group owner leaves, the group has to reform the network and select another group owner to host the slides. However, if the group owner establishes a succession plan prior to their departure, the need to restart and reform the peer-to-peer network is mitigated and the user experience improved.

Example embodiments of the invention will now be described with reference to the accompanying figures.

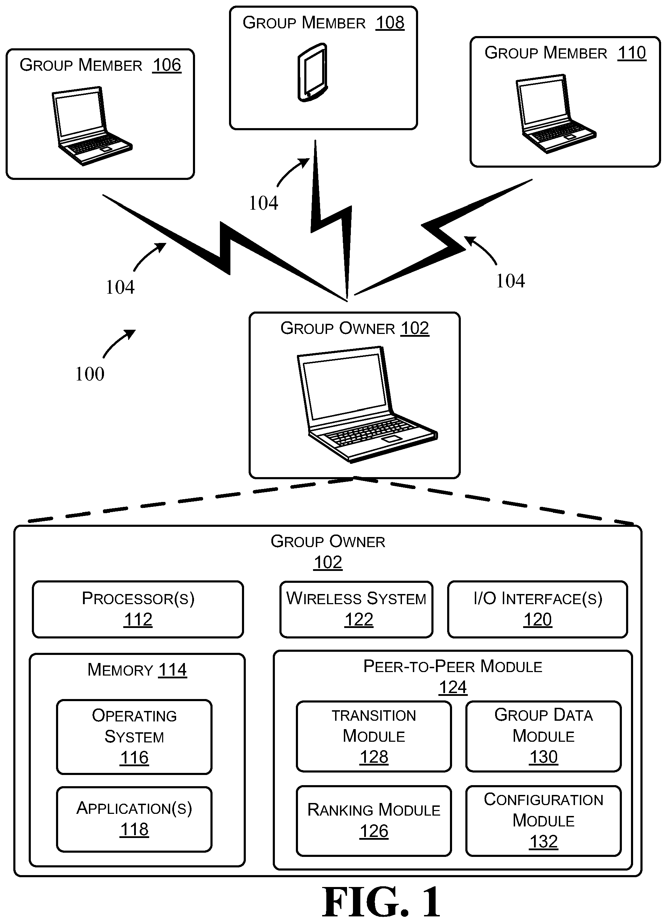

FIG. 1 is a simplified block diagram of a representative environment of a peer-to-peer wireless network including a group owner device that manages the network with the group member devices. The environment 100 may include a group owner device 102 coupled via a wireless connection 104 to a plurality of group member devices 106, 108, 110. In this embodiment, the group owner device (group owner) 102 operates as a software access point for the group member devices (group member) 106, 108, 110. The group owner 102 manages resources of the group and facilitates information sharing between the group members. For example, information is shared between one group member 106 and another group member 108 via the group owner 102. In another example, the group members are engaged in playing a game and the group owner functions as the host of the game by providing the gaming environment for each of the group members 106, 108, 110 to play against or with each other. Similarly, in another example, the group owner 102 may host a presentation for a meeting and provide an environment for the group members 106, 108, 110 to view and interact with the presentation.

The group owner 102 may provide an important role in the peer-to-peer network as the software access point for the group members 106, 108, 110. If the group owner 102 leaves the network, voluntarily or involuntarily, the network is disrupted and the group members 106, 108, 110 must restart and reform the network. However, this disruption is mitigated by generating and implementing a succession plan for the group owner amongst the capable remaining group members 106, 108, 110.

In one embodiment, the group owner 102 and the group members 106, 108, 110 include a variety of similar components and modules in order to implement the succession plan. For example, the devices 102, 106, 108, 110 may include a computer processor 112 to execute computer-readable instructions stored in memory 114 that enable the device to execute instructions on the hardware, applications, or services of the devices 102, 106, 108, 110. The one or more computer processors 112 may include, without limitation, a central processing unit (CPU), a digital signal processor (DSP), a reduced instruction set computer (RISC), a complex instruction set computer (CISC), a microprocessor, a microcontroller, a field programmable gate array (FPGA), or any combination thereof. The device 102 may also include a chipset (not shown) for controlling communications between the one or more processors 112 and one or more of the other components of the device 102. In certain embodiments, the device 102 may be based on an Intel® Architecture system and the processor(s) 112 and chipset may be from a family of Intel® processors and chipsets, such as the Intel® Atom® processor family. The one or more processors 112 may also include one or more application-specific integrated circuits (ASICs) or application-specific standard products (ASSPs) for handling specific data processing functions or tasks.

Memory 114 may include an operating system 116 to manage and execute applications 118 stored therein as well as other systems and modules within the device 102. For example, the device 102 may include an Input/Output (I/O) interface 120 that enables a user to view content displayed by the device or to interact with the device 102 using various tactile responsive interfaces such as a keyboard, touch screen, or mouse. The memory 114 may include one or more volatile and/or non-volatile memory devices including, but not limited to, random access memory (RAM), dynamic RAM (DRAM), static RAM (SRAM), synchronous dynamic RAM (SDRAM), double data rate (DDR) SDRAM (DDR-SDRAM), RAM-BUS DRAM (RDRAM), flash memory devices, electrically erasable programmable read-only memory (EEPROM), non-volatile RAM (NVRAM), universal serial bus (USB) removable memory, or combinations thereof.

A wireless system 122 may enable the device 102 to communicate wirelessly with the other devices 106, 108, 110 over the peer-to-peer network 104. Lastly, a peer-to-peer module 124 manages the generation and implementation of the succession plan. The wireless system 122 that includes the hardware and software to broadcast and receive messages either using the Wi-Fi Direct Standard (*See;* Wi-Fi Direct specification published in Oct. 2010) and or the IEEE 802.11 wireless standard (*See;* IEEE 802.11-2007, published March 8, 2007; IEEE 802.11n-2009, published Oct. 2009) or a combination thereof. The wireless system 122 may include a transmitter and a receiver or a transceiver (not shown) capable of operating in a broad range of operating frequencies governed by the 802.11 wireless standard.

In one embodiment, the peer-to-peer module may include a ranking module 126, a transition module 128, a group data module 130, and a configuration module 132. The ranking module 126 enables the group owner 102 to send willingness requests to the other group members 106, 108, 110. The willingness requests include a request for group owner candidates and their respective capabilities to be a group owner. The request for group owner candidates solicits a response from the group members on whether they want to consider becoming a group owner in the succession plan. The ranking module also receives the responses to the willingness request. The responses include an acknowledgement, either affirmative or negative, of group owner candidate status and the capabilities of the respective group owner candidate. The capabilities may include, but are not limited to, computer processor capability, memory capability, bandwidth capability, battery power capacity, receiving signal strength, location, application capability, video capability, audio capability, or any other hardware or software capability resident on the device. The amount of detail provided on the capabilities may include, but are not limited to, the make, model, version, format, style, or any other feature that would distinguish the capabilities of the device 102.

After receiving the responses, the ranking module 128 ranks the group owner candidates 106, 108, 110 may determine a succession order among the candidates to be implemented when the group owner 102 leaves the peer-to-peer network 104. The ranking criteria is based at least in part on the capability of each group member 106, 108, 110 to function as the access point for the peer-to-peer network 104. The capabilities may include, but are not limited to, computer processor capability, memory capability, bandwidth capability, battery power capacity, receiving signal strength, location, application capability, video capability, audio capability, or any other hardware or software capability resident on the device. The ranking module 128 assigns a hierarchical ranking of the one or more of the qualified group members to replace the group owner 102 if the succession plan is invoked. The first replacement is assigned as candidate 1, the next replacement assigned as candidate 2, and the next replacement is assigned as candidate 3. For example, candidate 1 106 would be the first to the group owner 102, and candidate 2 108 would replace the group owner 102 if candidate 1 was not able to function as group owner for any reason. Once the ranking is determined, the group owner 102 notifies the group members of the ranking so they may update their transition modules accordingly.

In this embodiment, the transition module 128 may implement the succession plan between the group owner candidates. The succession plan may be implemented when the group owner 102 leaves the peer-to-peer network 104 which enables or triggers candidate 1 106 to assume the role of group owner. In one embodiment, the group members 106, 108, 110 are notified by the group owner 102 of its pending departure from the peer-to-peer network 104 via a leaving announcement message. When the peer-to-peer module of candidate 1 106 receives the leaving announcement message it broadcasts a willingness request to the remaining group members 108, 110 to inform them candidate 1 106 is the new group owner. The willingness request also solicits the group members 108, 110 to acknowledge the change of the group owner and provide their acknowledgement of group owner candidate status and capabilities so the new group owner 106 may generate another succession plan. After the ranking module of the new group owner 106 receives the responses, a new succession plan is provided to the remaining group members 108, 110.

In another embodiment, the group members 106, 108, 110 may be notified by the group owner 102 of its immediate departure from the peer-to-peer network 104 when the group members 106, 108, 110 fail to receive a group owner beacon within a periodic time interval. For example, the group owner 102 may provide a group owner beacon to each of the group members 106, 108, 110 on a periodic time interval. The group owner beacon notifies the group members 106, 108, 110 that the group owner 102 is available or is still operating as the group owner. If the group owner fails to provide the group owner beacon within the periodic time interval, the transition module for candidate 1 106 implements the succession plan by sending out a transition message that may include the willingness request to collect information from the remaining group members 108, 110 to create another succession plan. In one example, the remaining group members 108, 110 begin communicating with the new group owner 106 to continue operating as intended. For instance, the new group owner may begin to host the new gaming environment or presentation environment that was hosted by the former group owner 102. However, if the former group owner 102 begins rebroadcasting the group owner beacon, the new group owner 106 may surrender the group owner role to the former group owner 102. Alternatively, in another embodiment, the new group owner 106 maintains group ownership and the former group owner may provide a response to a willingness request from the new group owner 106. The new group owner 106 may use the response from the former group owner 102 to incorporate the former group owner 106 into the new succession plan.

In another embodiment, the group owner 102 fails to send the group owner beacon within a certain time interval and the candidate 1 106 fails to provide the transition message within another time interval, then candidate 2 108 may provide a transition message to the remaining group member 110. The transition message, as noted above, may include a willingness request that informs the remaining group member to provide a group candidate acknowledgement and capability information so that the new group owner 108 may generate a new succession plan. It should be noted, this transition process could be implemented accordingly until there is only one group member remaining. For example, if the peer-to-peer network had ten group members, the succession plan would step through each group owner candidate until a new group owner was detected and began the transition process with the other remaining devices.

In another embodiment, the willingness request may include a request for addressing and credential information from the group members 106, 108, 110. The addressing and credential information for each device is stored in their respective group data module 130. In one embodiment, the group data module 130 may also record the performance of the wireless system 122 for each respective group member. Accordingly, the ranking module 126 may use the performance information for the group owner candidate ranking.

In another embodiment, the peer-to-peer module 124 may include a configuration module 132. The configuration module 132 may store the configuration information of the device 102, the components, modules, or applications of the device 102.

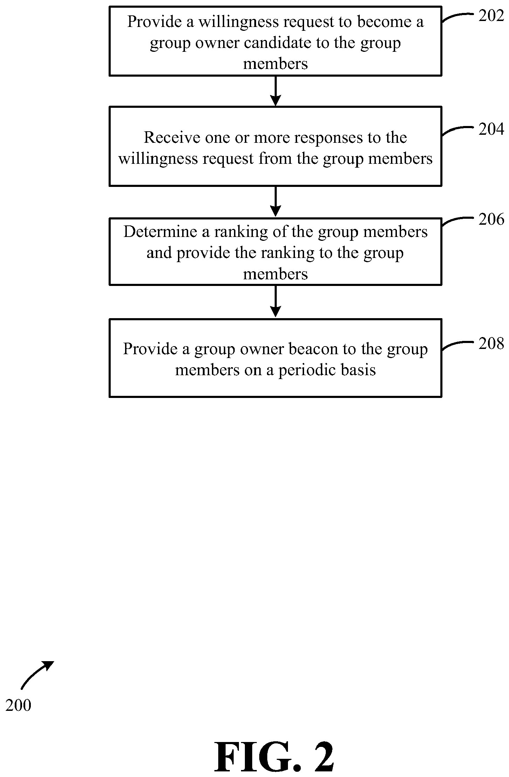

FIG. 2 is a flow diagram illustrating an exemplary method for a group owner device to determine a succession plan for a peer-to-peer wireless network. A group owner 102 for a peer-to-peer wireless network 104 including a plurality of group members 106, 108, 110, may implement the method 200.

At block 202, the group owner 102 may provide a willingness request over the peer-to-peer wireless network 104 to a plurality of group members 106, 108, 110. The willingness request solicits an acknowledgement from the group members on whether they want to be considered as a group owner candidate for a succession plan for the peer-to-peer wireless network 104. The willingness request may also comprise a request for the capabilities or configurations of the group members.

At block 204, the group owner 102 receives the responses to the willingness request from the group members 106, 108, 110 of the peer-to-peer network. The responses may include an indication of the willingness of the group member to become a group owner candidate in the succession plan. The responses may also include the capabilities and configurations of the group member devices 106, 108, 110. The response may include computer processor capability, memory capability, bandwidth capability, battery power capacity, receiving signal strength, location, application capability, video capability, audio capability, or any other hardware or software capability resident on the devices.

At block 206, the group owner 102 may determine the ranking of the group owner candidates based on the response information analyzed by the ranking module 126. Broadly, the ranking is based at least in part on the capability of the device to host one or more environments (e.g., gaming, presentation, chatting (text, audio, visual), and file sharing). In one embodiment, the ranking of group member 106 may be based on the processing capability of the computer processor, the amount of memory available to host the group environment, the bandwidth capability of the wireless system for the group member 106, the type and compatibility of the applications on the group member device 106, battery power capacity or power level of the group member 106, the perceived strength of the Wi-Fi signal for the group member 106, and the affirmative acknowledgement that the group member 106 is willing to be a group owner candidate.

In one embodiment, the ranking module 126 assigns relative values to each of the features of the responses and may determine the ranking based on the sum of those values. In another embodiment, the ranking module 126 assigns relative values to each of the features listed in the responses, but weights one or more of the features differently based on the environment hosted by the group owner 102. For example, the ranking module 126 may weight the amount of available memory at a higher threshold than computer processor capability if the host environment is more memory intensive than processor intensive (e.g., a slide presentation environment). On the other hand, the ranking module 126 may apply more weight to the bandwidth ranking if the host environment functions more efficiently with a higher bandwidth (e.g., video chatting). The ranking module 126 may optimize the ranking process to accommodate the respective environmental requirements of the host and the requirements and capabilities of the group members.

At block 208, the group owner 102 may provide a group owner beacon to the group members 106, 108, 110 of the peer-to-peer network. The group owner beacon is transmitted on a periodic time interval to provide confirmation that the group owner is operating as intended. The group owner beacon may also include the group owner candidate ranking. Over time, the group owner 102 may send additional willingness requests to update the group owner candidate ranking to account for departing or new group members.

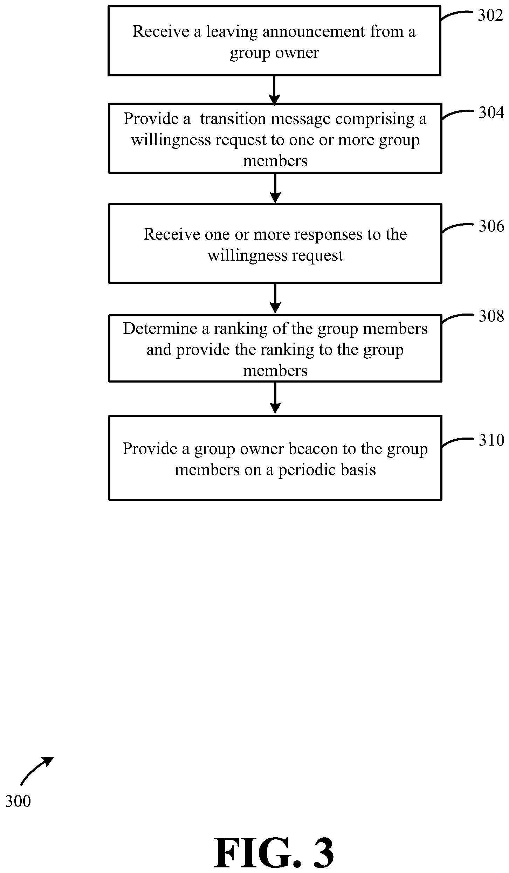

FIG. 3 is a flow diagram illustrating an exemplary method for a group member device to implement a succession plan due to the voluntary departure of the group owner from a peer-to-peer wireless network. The method 300 may include a group member device 106 that has been designated as group owner candidate 1 106 in the succession plan generated by the group owner 102.

At block 302, the group member/group owner candidate 1 106 receives a leaving announcement message from the group owner 102. Receiving the leaving announcement enables the succession plan provided by the group owner 102. In one embodiment, the group owner may provide a time window for the candidate 1 106 to transition to the group owner role for the peer-to-peer network 104. For example, the candidate 1 106 may have up to 100ms to notify the other group members and assume the group owner role (.e.g., hosting the group environment). Accordingly, candidate 1 106 becomes the new group owner 106. In one embodiment, the former group owner 102 may provide the necessary information to recreate the host environment on the new group owner 106.

At block 304, the new group owner 106 may provide a transition message to the remaining group members 108, 110. The transition message may include a notification of the transition, the address information of the new group owner 106, and a willingness request for the remaining group members 108, 110.

At block 306, the new group owner 106 receives the responses to the transition message from the remaining group members of the peer-to-peer network 104. The responses include a response to the willingness request that indicates whether the group member 108, 110 has agreed to become a group owner candidate for a new succession plan generated by the new group owner 106.

At block 308, the new group owner 106 ranks the group owner candidates based on similar techniques discussed above in description of FIGS. 1 and 2. Following the ranking, the new group owner generates a new succession plan and may provide the plan to the remaining group owners 108, 110.

At block 310, the new group owner 106 may provide a new group owner beacon to the members of the peer-to-peer network 104 at a periodic time interval. The new group owner beacon may provide intermittent notification to the group members 108, 110 that the new group owner is operating as intended as maintaining the group owner role for the peer-to-peer network 104.

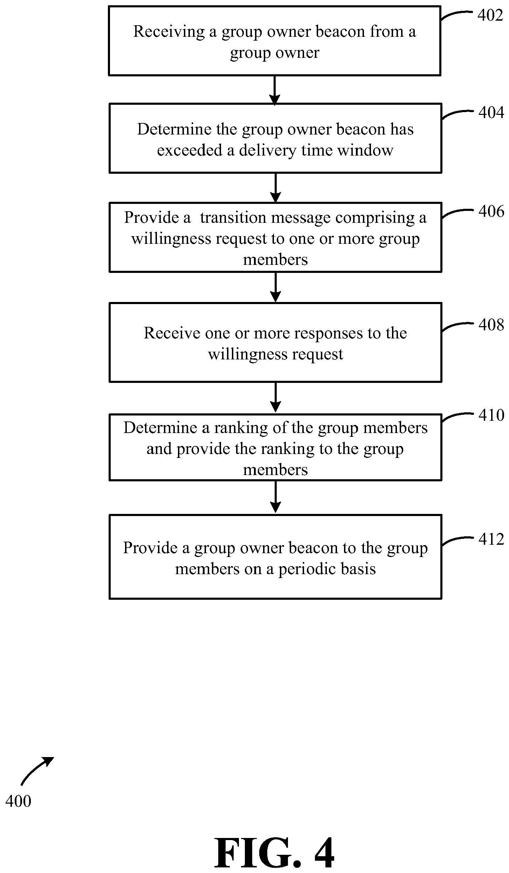

FIG. 4 is a flow diagram illustrating an exemplary method for a group owner device to implement a succession plan due to the involuntary departure of the group owner from a peer-to-peer wireless network. The method 400 may include a group member 106 of peer-to-peer network 104of peer-to-peer network 104. The group member 106 is also candidate 1 106 for the group owner succession plan generated by the group owner 102.

At block 402, the group member 106 is receiving a group owner beacon on a periodic time interval from the group owner 102. The group owner beacon informs the group member 106 that the group owner 102 is still operating as the group owner of the peer-to-peer network 104. Accordingly, the group member 106 should continue to operate by sending network messages to the group owner 102.

At block 404, the group member 106 detects that the group owner beacon has exceeded a delivery time window. In one embodiment, the delivery time window may be 20ms. Therefore, the group member 106 should expect to receive the group owner beacon no less than once every 20ms. In alternate embodiments, the delivery time window may be greater than or less than 20 ms. Since the group member is candidate 1 in the succession plan, the group member has the primary responsibility to assume the role of the group owner ahead of the other group members 108, 110.

At block 406, the candidate 1 106 transmits a transition message in response to not receiving the group owner beacon within the designated delivery time window. The transition message informs the remaining group members that the group owner 102 has involuntarily departed from the peer-to-peer network 104. The transition message also may include a willingness request that solicits the remaining group members 108, 110 on whether they desire to be group owner candidate and their capabilities.

At block 408, the new group owner 106 receives the responses to the willingness requests from the remaining group members 108, 110.

At block 410, the new group owner 106 ranks the group members 108, 110 according to the ranking criteria discussed above in the discussion of FIGS. 1 and 2. Following the ranking, the new group owner 106 generates a new succession plan that may include the remaining members of the peer-to-peer network 104. The remaining group members 108, 110 receive the new succession plan in the event that the new group owner 106 leaves the peer-to-peer wireless network 104.

At block 412, the new group owner may provide a new group owner beacon to the group members 108, 110 of the peer-to-peer network 104. Additionally, the new group owner 106 has implemented a new hosting environment for the peer-to-peer network 104. The remaining group members 108, 110 begin to direct network traffic to the new group owner 106 instead of the former group owner 102.

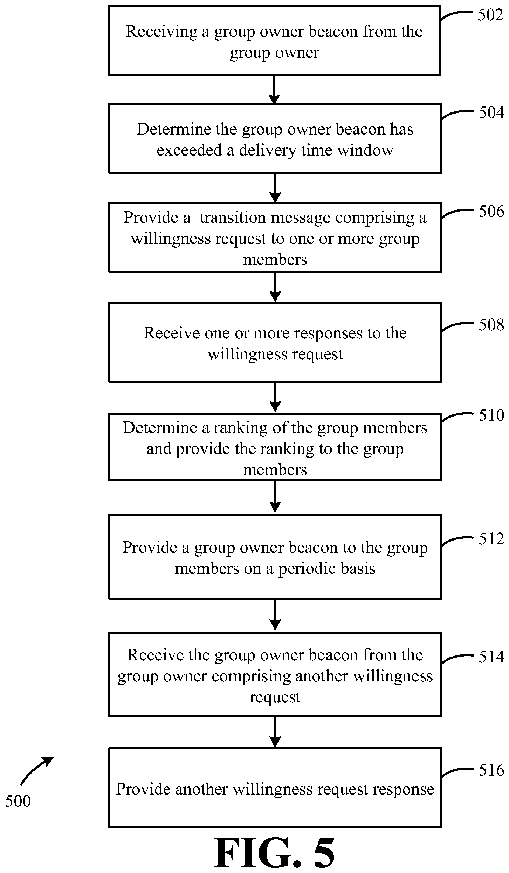

FIG. 5 is a flow diagram illustrating an exemplary method for a group owner device to reestablish a group owner role of a peer-to-peer wireless network, following the group owner's departure from the network. The method 500 may include a group member 106 that transitions to a group owner role and then transitions back to a group member role when the former group owner 102 attempts to reestablish the group owner role.

At block 502, the group member 106 is receiving a group owner beacon on a periodic time interval from the group owner 102. The group owner beacon informs the group member 106 that the group owner 102 is still operating as the group owner of the peer-to-peer network 104. Accordingly, the group member 106 should continue to operate by sending network messages to the group owner 102.

At block 504, the group member 106 detects that the group owner beacon has exceeded a delivery time window. In one embodiment, the delivery time window may be 20ms. Therefore, the group member 106 should expect to receive the group owner beacon no less than once every 20ms. In alternate embodiments, the delivery time window may be greater than or less than 20 ms. Since the group member is candidate 1 in the succession plan, the group member has the primary responsibility assume the role of the group owner ahead of the other group members 108, 110.

At block 506, the candidate 1 106 transmits a transition message in response to not receiving the group owner beacon within the designated delivery time window. The transition message information the remaining group members that the group owner 102 has involuntarily departed from the peer-to-peer network 104. The transition message also may include a willingness request that solicits the remaining group members 108, 110 on whether they desire to be group owner candidate and their capabilities.

At block 508, the new group owner 106 receives the responses to the willingness requests from the remaining group members 108, 110.

At block 510, the new group owner 106 ranks the group members 108, 110 according to the ranking criteria discussed above in the discussion of FIGS. 1 and 2. Following the ranking, the new group owner 106 generates a new succession plan that may include the remaining members of the peer-to-peer network 104. The remaining group members 108, 110 receive the new succession plan in the event that the new group owner 106 leaves the peer-to-peer wireless network 104.

At block 512, the new group owner may provide a new group owner beacon to the group members 108, 110 of the peer-to-peer network 104. Additionally, the new group owner 106 has implemented a new hosting environment for the peer-to-peer network 104. The remaining group members 108, 110 begin to direct network traffic to the new group owner 106 instead of the former group owner 102.

At block 514, the new group owner 106 receives a group owner beacon from the former group owner 102. In one embodiment, the new group owner surrenders the group owner role back to the former group owner 102. For example, when the new group owner 106 receives the group owner beacon from the former group owner 102 within a predetermined timeframe, the new group owner will surrender the group owner role to the former group owner. As part of surrendering the group owner role, the new group owner 106 will acknowledge the surrender and request the former group owner to generate a new succession plan. Accordingly, the former group owner 102 will send out a transition message that may include a willingness request to solicit information to generate the new succession plan.

However, in another embodiment, if the group owner beacon from the former group owner 102 is received after the predetermined period, the new group owner 106 will not surrender the group owner role. The former group owner 102 may solicit to join the peer-to-peer network as a group member.

At block 516, the group member 106 may provide a response to the willingness request received from the group owner 102. Additionally, the group member 106 discontinues hosting the peer-to-peer network 104 environment as the group owner 102 reassumes the role of group owner.

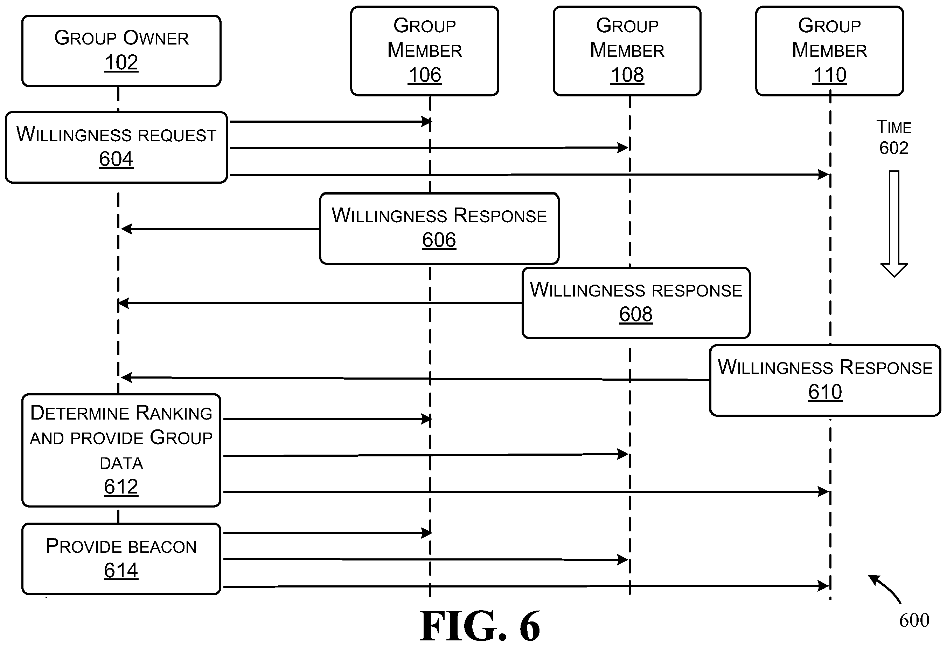

FIG. 6 is a flow diagram illustrating an exemplary method for determining a succession plan for a group owner of a peer-to-peer wireless network. The method 600 may include a group owner 102 that generates the succession plan using the group members 106, 108, 110. The flow diagram of FIG. 6 may include group owner 102, group member 106, group member 108, and group member 110. The flow diagram also may include a time axis 602 that may provide an explanation of the potential sequencing of the devices 102, 106, 108, 110. FIG. 6 is a representation of one embodiment for determining a succession plan. Additional embodiments may include acts performed in different order, additional acts, or even omitting a portion of the acts illustrated in FIG. 6.

At block 604, the group owner 102 may provide a willingness request to the group members 106, 108, 110 of the peer-to-peer network. The willingness request solicits an acknowledgement from the group members on whether they want to be considered as a group owner candidate for a succession plan for the peer-to-peer wireless network 104. The willingness request may also comprise a request for the capabilities or configurations of the group members.

At block 606, the group member 106 may provide a response to the willingness request from the group owner 102. The response may include an acknowledgement on whether the group member 106 wants to be considered a group owner candidate and the capabilities of the group member device 106.

At block 608, the group member 108 may provide a response to the willingness request from the group owner 102. The response may include an acknowledgement on whether the group member 108 wants to be considered a group owner candidate and the capabilities of the group member device 108.

At block 610, the group member 110 may provide a response to the willingness request from the group owner 102. The response may include an acknowledgement on whether the group member 110 wants to be considered a group owner candidate and the capabilities of the group member device 110.

At block 612, the group owner 102 may determine the ranking of the group owner candidates. The group owner 102 also generates a succession plan that is provided to the group members 106, 108, 110.

At block 614, the group owner 102 may provide the group owner beacon to the group members at a periodic time interval. As noted above, the group owner beacon notifies the group members 106, 108, 110 that the group owner 102 is still the group owner and hosting the environment for the peer-to-peer network. Accordingly, the group members 106, 108, 110 will direct their network traffic to the group owner 102 who is acting as the access point for the peer-to-peer wireless network 104.

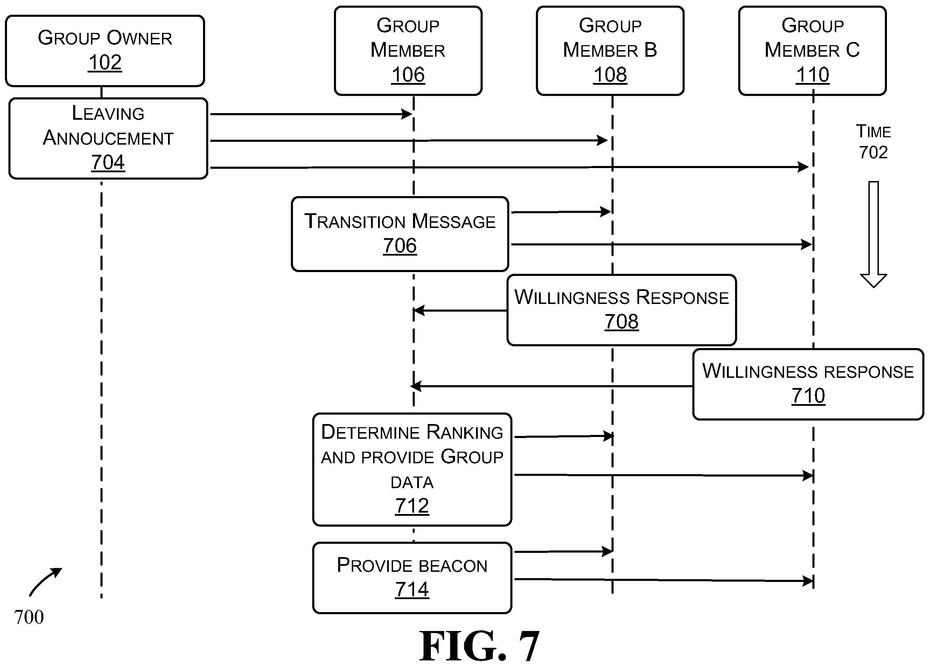

FIG. 7 is a flow diagram illustrating an exemplary method for implementing a succession plan due to the voluntary departure of a group owner from a peer-to-peer wireless network. The method 700 illustrates the actions of the group owner 102 and the group members 106, 108, 110 when the group owner voluntarily departs from the peer-to-peer wireless network 104. The flow diagram also may include a time axis 702 that may provide an explanation of the potential sequencing of the devices 102, 106, 108, 110. FIG. 7 is a representation of one embodiment for determining a succession plan when a group owner 102 voluntarily departs from the peer-to-peer wireless network 104. Additional embodiments may include acts performed in different order, additional acts, or even omitting a portion of the acts illustrated in FIG. 7.

At block 704, the group owner 102 may provide a leaving announcement message to the group members 106, 108, 110. The leaving announcement message notifies the group members that the group owner will no longer be hosting the peer-to-peer wireless network environment. Accordingly, the succession plan that was previously provided should be implemented. In one embodiment, the leaving announcement message will provide an indication of how long the group members have to implements the transition to a new group owner. The leaving announcement message may also include information that enables the new group owner to setup a new hosting environment. For example, the information could include a slide presentation hosted by the departing group owner 102, or a gaming log that enables the new group owner to host an on-going game with minimal interruption.

At block 706, the leading group owner candidate 106 may provide a transition message to the remaining group members 108, 110. The transition message, as noted above, may include a willingness request that informs the remaining group member to provide a group candidate acknowledgement and capability information so that the new group owner 106 may generate a new succession plan. The transition message may include a notification of the transition, the address information of the new group owner 106, and a willingness request for the remaining group members 108, 110.

At block 708, the group member 108 may provide a response to the willingness request from the new group owner 106. The response may include an acknowledgement on whether the group member 108 wants to be considered a group owner candidate and the capabilities of the group member device 108.

At block 710, the group member 110 may provide a response to the willingness request from the new group owner 106. The response may include an acknowledgement on whether the group member 110 wants to be considered a group owner candidate and the capabilities of the group member device 110.

At block 712, the new group owner 106 may determine the ranking of the group owner candidates. The group owner 106 also generates a succession plan that is provided to the group members 108, 110.

At block 714, the new group owner 106 may provide the group owner beacon to the group members at a periodic time interval. As noted above, the group owner beacon notifies the group members 108, 110 that the new group owner 106 is the group owner and hosting the environment for the peer-to-peer wireless network 104. Accordingly, the group members 108, 110 will direct their network traffic to the new group owner 106 who is acting as the access point for the peer-to-peer wireless network 104.

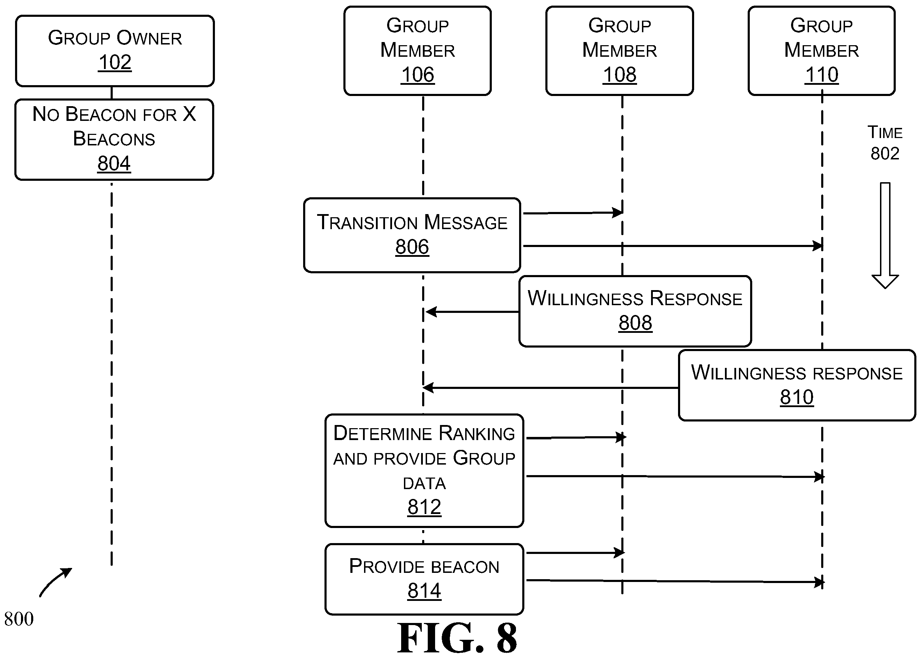

FIG. 8 is a flow diagram illustrating an exemplary method for implementing a succession plan due to the involuntary departure of a group owner from a peer-to-peer wireless network. The method 800 illustrates the actions of the group owner 102 and the group members 106, 108, 110 when the group owner 102 involuntarily departs from the peer-to-peer wireless network 104. The flow diagram also may include a time axis 802 that may provide an explanation of the potential sequencing of the devices 102, 106, 108, 110. FIG. 8 is a representation of one embodiment for determining a succession plan when a group owner 102 involuntarily departs from the peer-to-peer wireless network 104. Additional embodiments may include acts performed in different order, additional acts, or even omitting a portion of the acts illustrated in FIG. 8.

At block 804, the group owner 102 fails to provide a group owner beacon within a delivery time window to the group members 106, 108, 110. Accordingly, the remaining group members 106, 108, 110, implement the succession plan that was previously provided.

At block 806, the leading group owner candidate 106 may provide a transition message to the remaining group members 108, 110. The transition message, as noted above, may include a willingness request that informs the remaining group member to provide a group candidate acknowledgement and capability information so that the new group owner 106 may generate a new succession plan. The transition message may include a notification of the transition, the address information of the new group owner 106, and a willingness request for the remaining group members 108, 110.

At block 808, the group member 108 may provide a response to the willingness request from the new group owner 106. The response may include an acknowledgement on whether the group member 108 wants to be considered a group owner candidate and the capabilities of the group member device 108.

At block 810, the group member 110 may provide a response to the willingness request from the new group owner 106. The response may include an acknowledgement on whether the group member 110 wants to be considered a group owner candidate and the capabilities of the group member device 110.

At block 812, the new group owner 106 may determine the ranking of the group owner candidates. The group owner 106 also generates a succession plan that is provided to the group members 108, 110.

At block 814, the new group owner 106 may provide the group owner beacon to the group members at a periodic time interval. As noted above, the group owner beacon notifies the group members 108, 110 that the new group owner 106 is the group owner and hosting the environment for the peer-to-peer wireless network 104. Accordingly, the group members 108, 110 will direct their network traffic to the new group owner 106 who is acting as the access point for the peer-to-peer wireless network 104.

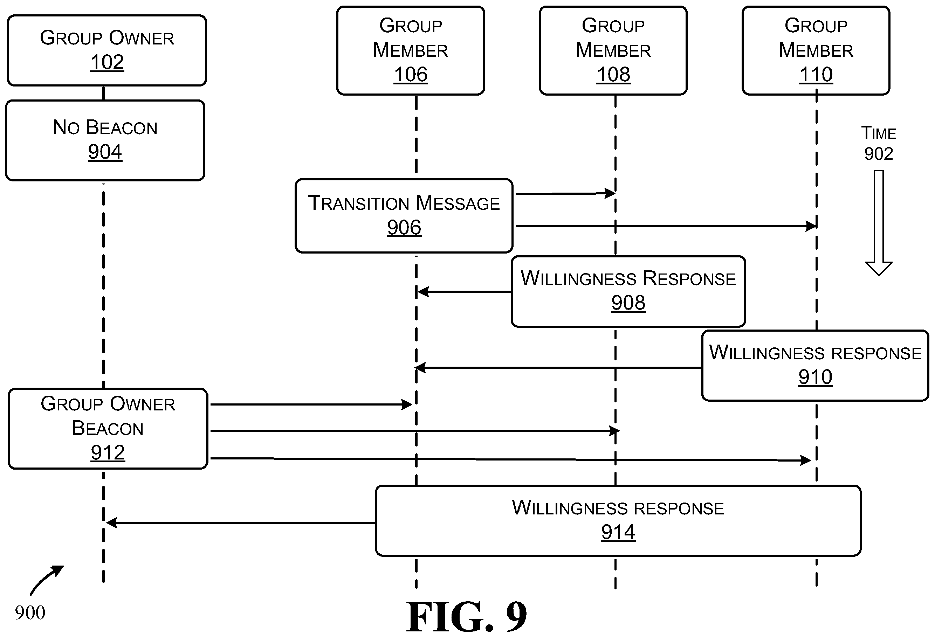

FIG. 9 is a flow diagram illustrating an exemplary method for reestablishing a group owner of a peer-to-peer wireless network, following the group owner's departure from the network. The method 900 illustrates the actions of the group owner 102 and the group members 106, 108, 110 when the group owner 102 involuntarily departs from the peer-to-peer wireless network 104 and attempts to reassume the group owner role. The flow diagram also may include a time axis 902 that may provide an explanation of the potential sequencing of the devices 102, 106, 108, 110. FIG. 9 is a representation of one embodiment for determining a succession plan when a group owner 102 involuntarily departs from the peer-to-peer wireless network 104. Additional embodiments may include acts performed in different order, additional acts, or even omitting a portion of the acts illustrated in FIG. 9.

At block 904, the group owner 102 fails to provide a group owner beacon within a delivery time window to the group members 106, 108, 110. Accordingly, the remaining group members 106, 108, 110, implement the succession plan that had been provided.

At block 906, the leading group owner candidate 106 may provide a transition message to the remaining group members 108, 110. The transition message, as noted above, may include a willingness request that informs the remaining group member to provide a group candidate acknowledgement and capability information so that the new group owner 106 may generate a new succession plan. The transition message may include a notification of the transition, the address information of the new group owner 106, and a willingness request for the remaining group members 108, 110.

At block 908, the group member 108 may provide a response to the willingness request from the new group owner 106. The response may include an acknowledgement on whether the group member 108 wants to be considered a group owner candidate and the capabilities of the group member device 108.

At block 910, the group member 110 may provide a response to the willingness request from the new group owner 106. The response may include an acknowledgement on whether the group member 110 wants to be considered a group owner candidate and the capabilities of the group member device 110.

At block 912, the former group owner 102 may provide a group owner beacon to the group members 106, 108, 110. In one embodiment, the new group owner 106 surrenders the group owner role to the former group owner 102. However, if the group owner beacon from the former group owner 102 does not provide the beacon within a predetermined time period, the new group owner will not surrender the group owner role and will continue to operate as the group owner. Additionally, the former group owner may provide another willingness request to establish a new succession plan when resumes the group owner role.

At block 914, the group members 106, 108, 110 provide a response to the willingness request provided by the former group owner 102.

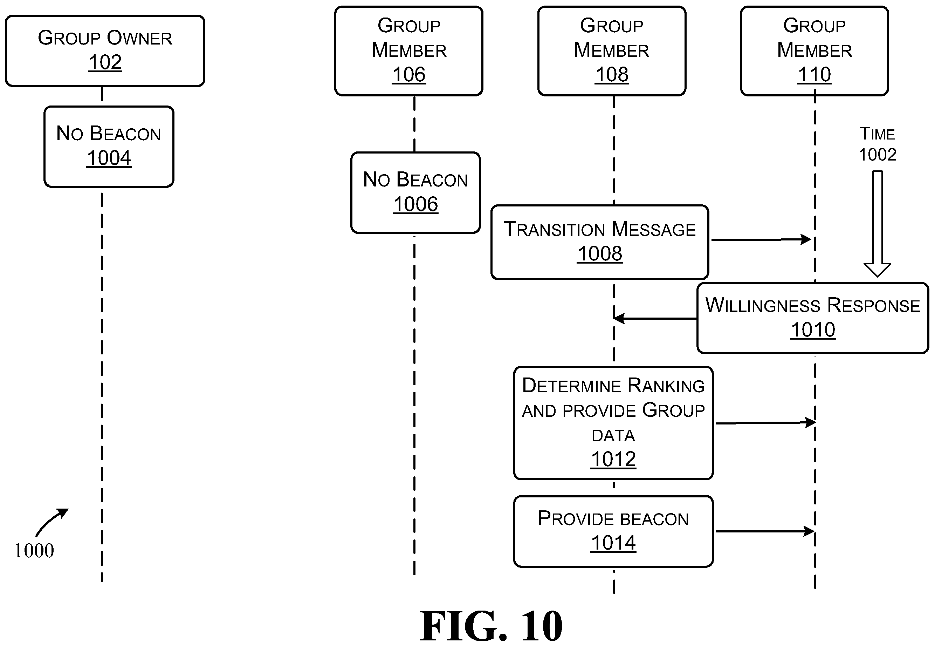

FIG. 10 is a flow diagram illustrating an exemplary method for implementing a succession plan due to the involuntary departure of one or more devices from a peer-to-peer wireless network. The method 1000 illustrates the actions of the group owner 102 and the group members 106, 108, 110 when the group owner 102 and the leading group owner candidate 106 involuntarily depart from the peer-to-peer wireless network 104. The flow diagram also includes a time axis 1002 that may provide an explanation of the potential sequencing of the devices 102, 106, 108, 110. FIG. 10 is a representation of one embodiment for determining a succession plan when a group owner 102 and group member involuntarily departs from the peer-to-peer wireless network 104. Additional embodiments may include acts performed in different order, additional acts, or even omitting a portion of the acts illustrated in FIG. 10.

At block 1004, the group owner 102 fails to provide a group owner beacon within a delivery time window to the group members 106, 108, 110. Accordingly, the remaining group members 106, 108, 110, implement the succession plan that had been provided.

At block 1006, the leading group owner candidate 106 also fails to provide a transition message to the remaining group members 108, 110.

At block 808, the second group owner candidate 108 may provide a transition message to the remaining group member 110. The transition message, as noted above, may include a willingness request that informs the remaining group member to provide a group candidate acknowledgement and capability information so that the new group owner 108 may generate a new succession plan. The transition message may include a notification of the transition, the address information of the new group owner 108, and a willingness request for the remaining group member 110.

At block 1010, the group member 110 may provide a response to the willingness request from the new group owner 108. The response may include an acknowledgement on whether the group member 110 wants to be considered a group owner candidate and the capabilities of the group member device 110.

At block 1012, the new group owner 108 may determine the ranking of the group owner candidates and generates a succession plan that is provided to the group member 110.

At block 1014, the new group owner 108 may provide the group owner beacon to the group members at a periodic time interval. As noted above, the group owner beacon notifies the group members 110 that the new group owner 108 is the group owner and hosting the environment for the peer-to-peer wireless network 104. Accordingly, the group members 110 will direct their network traffic to the new group owner 108 who is acting as the access point for the peer-to-peer wireless network 104.

Embodiments described herein may be implemented using hardware, software, and/or firmware, for example, to perform the methods and/or operations described herein. Certain embodiments described herein may be provided as a tangible machine-readable medium storing machine-executable instructions that, if executed by a machine, cause the machine to perform the methods and/or operations described herein. The tangible machine-readable medium may include, but is not limited to, any type of disk including floppy disks, optical disks, compact disk read-only memories (CD-ROMs), compact disk rewritables (CD-RWs), magneto-optical disks, semiconductor devices such as read-only memories (ROMs), random access memories (RAMs) such as dynamic and static RAMs, erasable programmable read-only memones (EPROMs), electrically erasable programmable read-only memories (EEPROMs), flash memories, magnetic or optical cards, or any type of tangible media suitable for storing electronic instructions. The machine may include any suitable processing or computing platform, device or system and may be implemented using any suitable combination of hardware and/or software. The instructions may include any suitable type of code and may be implemented using any suitable programming language. In other embodiments, machine-executable instructions for performing the methods and/or operations described herein may be embodied in firmware.

Various features, aspects, and embodiments have been described herein. The features, aspects, and embodiments are susceptible to combination with one another as well as to variation and modification, as will be understood by those having skill in the art The present disclosure should, therefore, be considered to encompass such combinations, variations, and modifications.

The terms and expressions, which have been employed herein, are used as terms of description and not of limitation. In the use of such terms and expressions it is recognized that various modifications are possible within the scope of the claims. Other modifications, variations, and alternatives are also possible.

While certain embodiments of the invention have been described in connection with what is presently considered to be the most practical and various embodiments, it is to be understood that the invention is not to be limited to the disclosed embodiments, but on the contrary, is intended to cover various modifications and equivalent arrangements included within the scope of the claims. Although specific terms are employed herein, they are used in a generic and descriptive sense only, and not for purposes of limitation.

This written description uses examples to disclose certain embodiments of the invention, including the best mode, and to enable any person skilled in the art to practice certain embodiments of the invention, including making and using any devices or systems and performing any incorporated methods. The patentable scope of certain embodiments of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

The following examples pertain to further embodiments. A device comprising a wireless communications module to enable a peer-to-peer wireless connection with one or more other devices, to send willingness requests over the peer-to-peer wireless connection, and to receive responses to the willingness requests, a ranking module to rank the responses to the willingness requests, to select a group owner for the peer-to-peer wireless connection, and to select one or more subsequent group owners for the peer-to-peer wireless connection based at least in part on the ranking, and a transition module to assume a group owner role for the peer-to-peer wireless connection when the device detects that a group owner device is disconnecting from the peer-to-peer wireless connection, and to surrender the group owner role to the group owner device when the device receives a group owner beacon from the group owner device.

The device further comprising a group data module to store addressing information and credentials of the device and the addressing information, credentials, and subsequent group owner ranking of the one or more devices using the peer-to-peer wireless connection, and a configuration module to store one or more capabilities of the device.

In one embodiment, detecting that the group owner device is disconnecting from the peer-to-peer wireless connection is based at least in part on the device receiving a leaving announcement message from the group owner device. In another embodiment, detecting that the group owner device is disconnecting from the peer-to-peer wireless connection is based at least in part on the device not receiving the group owner beacon within a delivery time window.

In another embodiment, the willingness request comprises a request to acknowledge being a group owner candidate, and a request for one or more device capabilities.

Another embodiment pertains to a method comprising providing a willingness request to become one of the one or more group owner candidates for a peer-to-peer wireless network, receiving one or more responses to the willingness request from one or more group members of the peer-to-peer wireless network, determining a ranking of the one or more group members to become a subsequent group owner using a computer processor, providing the ranking to the group members, and providing a group owner beacon to the group members on a periodic time frame.

In another embodiment, the method further comprises providing a group owner negotiation message to one or more devices, and selecting a group owner based at least in part on the responses to the group owner message, the group owner being an access point for the peer-to-peer wireless network of the one or more group members.

In yet another method embodiment, a method comprising receiving a leaving announcement from a group owner, providing a transition message to one or more group members of a peer-to-peer wireless network, the transition message comprising a willingness request to become a group owner candidate, receiving one or more responses to the willingness request, determining a ranking of the one or more group members to become a subsequent group owner based at least in part on the responses to the willingness request using a computer processor, providing the ranking to the group members, and providing a group owner beacon to the group members on a periodic time frame.

In one embodiment, the leaving announcement comprises an indication of the group owner wanting to leave a group of the one or more group members of the peer-to-peer wireless network.

In another embodiment, the method further comprises assuming a role of group owner based at least in part on a prior ranking of subsequent group owners and receiving the leaving announcement.

In a further embodiment of a method, a method comprising receiving a first group owner beacon for a peer-to-peer wireless network on a periodic basis, determining the first group owner beacon has exceeded a delivery time window using a computer processor, providing a transition message over the peer-to-peer wireless network, the transition message comprising a willingness request, receiving one or more responses to the willingness request, determining a ranking of the one or more group members to become a subsequent group owner based at least in part on the responses to the willingness request, providing the ranking to the group members, and providing a second group owner beacon over the peer-to-peer wireless network on a periodic time frame.

In another embodiment, the method further comprises assuming a role of group owner based at least in part on a prior ranking of subsequent group owners and determining the first group owner beacon has exceeded the delivery time window.

In another embodiment, the method further comprises receiving the first group owner beacon following the providing of the transition message, and surrendering the role of group owner based at least in part on receiving the first group owner beacon.

In yet another embodiment, the methods above further comprise providing the ranking to the one or more group members, providing group information comprising address information and format requirements for group data, and receiving an acknowledgment of the ranking and the group information.

In yet another embodiment, the methods above further comprise wherein the one or more responses comprise an acknowledgement to become one of the one or more group owner candidates and one or more of the following memory capability; computer processor capability, battery power capacity, receiving signal strength, location, bandwidth capability, application capability, audio capability; or video capability.

In one more embodiment, the subsequent group owner comprises a role of assuming one or more functions of the group owner when the group owner is unavailable for a period of time or the group owner provides a leaving announcement comprising an indication that the group owner wants to leave the peer-to-peer wireless network.

Wherein the ranking is based at least in part on the following an acknowledgement to become one of the one or more group candidates, memory capability, computer processor capability, battery power capacity, receiving signal strength, location, bandwidth capability, application capability, audio capability; and video capability.

In another embodiment one or more tangible computer-readable storage media comprising computer-executable instructions operable to, when executed by at least one computer processor, enable the at least one computer processor to implement any of the methods described above.

In another embodiment, a communications device arranged to perform any of the methods described above.

## Claims

1. A device comprising:
a wireless communications module to enable a peer-to-peer wireless connection (104) with one or more other devices (106), to send willingness requests (604) over the peer-to-peer wireless connection (104), and to receive responses (606) to the willingness requests;
a ranking module (126) to rank the responses to the willingness requests, to select a group owner (102) for the peer-to-peer wireless connection (126), and to select one or more subsequent group owners for the peer-to-peer wireless connection based at least in part on the ranking; and
a transition module (128) to assume a group owner role for the peer-to-peer wireless connection based on the selection of the one or more subsequent group owners if the device (102) detects that a group owner device is disconnected from the peer-to-peer wireless connection;
wherein detecting that the group owner device (102) is disconnected from the peer-to-peer wireless connection is based at least in part on the device not receiving the group owner beacon (614) within a delivery time window.

2. The device of claim 1, wherein the transition module (128) surrenders the group owner role to the group owner device if the device (102) receives a group owner beacon from the group owner device (102).

3. The device of claim 1, further comprising:
a group data module (130) to store addressing information and credentials of the device and the addressing information, credentials, and subsequent group owner ranking of the one or more devices using the peer-to-peer wireless connection; and
a configuration module (132) to store one or more capabilities of the device.

4. The device of claim 1 , wherein detecting that the group owner device (102) is disconnected from the peer-to-peer wireless connection (104) is based at least in part on the device receiving a leaving announcement message (704) from the group owner device (102).

5. The device of claim 1, wherein the willingness request (604) comprising:
a request to acknowledge becoming a group owner candidate; and
a request for one or more device capabilities.

6. A method (200) comprising:
providing (202), by a communication module of a group owner device, a willingness request (604) to become one of the one or more group owner candidates for a peer-to-peer wireless network (100);
receiving (204), by the communication module of the group owner device, one or more responses (606) to the willingness request from one or more group members of the peer-to-peer wireless network (100);
determining, by a ranking module of the group owner device, a ranking 206 of the one or more group members to select a group owner (102) and one or more subsequent group owners for the peer-to-peer wireless network based on a ranking of the responses to the willingness requests; and
assuming, by a transition module of a group member device, a group owner role for the peer-to-peer wireless network based on the determined ranking when it is detected that a group owner device is disconnected from the peer-to-peer wireless network;
wherein detecting that the group owner device (102) is disconnected from the peer-to-peer wireless connection is based at least in part on the device not receiving the group owner beacon (614) within a delivery time window.

7. The method (200) of claim 6, further comprising:
providing the ranking to the one or more group members (106);
providing a group owner negotiation message to one or more devices (106); and selecting a group owner (102) from the one or more devices based at least in part on the responses to the group owner negotiation message, the group owner (102) being an access point for the peer-to-peer wireless network (100).

8. The method (200) of claim 6 further comprising:
providing (612) the ranking to the one or more group members;
providing group information comprising address information and format requirements for group data; and
receiving an acknowledgment of the ranking and the format requirements.

9. The method (200)of claim 6 wherein the one or more responses to the willingness request (604) comprise an acknowledgement to become one of the one or more group owner candidates and one or more of the following:
memory capability;
computer processor capability
battery power capacity;
receiving signal strength;
location;
bandwidth capability;
application capability;
audio capability; or
video capability.

10. The method (200) of claim 6 wherein the subsequent group owner comprises assuming one or more functions of the group owner if the group owner (102) is unavailable for a period of time or the group owner provides a leaving announcement message comprising an indication that the group owner wants to leave the peer-to-peer wireless network (100).

11. The method (200) of claim 6 wherein the ranking is based at least in part on the following:
an acknowledgement to become one of the one or more group candidates;
memory capability;
computer processor capability
battery power capacity;
bandwidth capability;
application capability;
audio capability; or
video capability.

12. One or more tangible computer-readable storage media comprising computer-executable instructions operable to, when executed by at least one computer processor, enable the at least one computer processor to implement a method according to any one of the claims 6 to 11.

13. A system comprising:
at least one memory storing computer-executable instructions;
at least one wireless network interface device;
at least one processor configured to access the at least one wireless network interface device and the at least one memory and execute the computer-executable instructions; and the device according to claim 1.

14. The system of claim 13, further comprising:
a group data module (130) to store addressing information and credentials of the device and the addressing information, credentials, and subsequent group owner ranking of the one or more devices using the peer-to-peer wireless connection; and
a configuration module (132) to store one or more capabilities of the device.

## Patentansprüche

1. Vorrichtung, umfassend:
ein Drahtloskommunikationsmodul zum Ermöglichen einer Peer-to-Peer-Drahtlosverbindung (104) mit einer oder mehreren anderen Vorrichtungen (106), zum Senden von Einsatzbereitschaftsanforderungen (604) über die Peer-to-Peer-Drahtlosverbindung (104) und zum Empfangen von Antworten (606) auf die Einsatzbereitschaftsanforderungen;
ein Einstufungsmodul (126) zum Einstufen der Antworten auf die Einsatzbereitschaftsanforderungen, zum Auswählen eines Gruppeneigners (102) für die Peer-to-Peer-Drahtlosverbindung (126) und zum Auswählen eines oder mehrerer nachfolgender Gruppeneigner für die Peer-to-Peer-Drahtlosverbindung zumindest teilweise basierend auf der Einstufung; und
ein Übergangsmodul (128) zum Einnehmen einer Gruppeneignerrolle für die Peer-to-Peer-Drahtlosverbindung basierend auf der Auswahl des einen oder der mehreren Gruppeneigener, falls die Vorrichtung (102) detektiert, dass eine Gruppeneignervorrichtung von der Peer-to-Peer-Drahtlosverbindung getrennt ist;
wobei Detektieren, dass die Gruppeneignervorrichtung (102) von der Peer-to-Peer-Drahtlosverbindung getrennt ist, mindestens teilweise darauf basiert, dass die Vorrichtung die Gruppeneignerbake (614) nicht innerhalb eines Lieferzeitfensters empfängt.

2. Vorrichtung nach Anspruch 1, wobei das Übergangsmodul (128) die Gruppeneignerrolle zugunsten der Gruppeneignervorrichtung aufgibt, falls die Vorrichtung (102) eine Gruppeneignerbake von der Gruppeneignervorrichtung (102) empfängt.

3. Vorrichtung nach Anspruch 1, ferner umfassend:
ein Gruppendatenmodul (130) zum Speichern von Adressierinformationen und Berechtigungen der Vorrichtung und der Adressierinformationen, Berechtigungen und nachfolgenden Gruppeneignereinstufung der einen oder der mehreren Vorrichtungen unter Verwendung der Peer-to-Peer-Drahtlosverbindung; und
ein Konfigurationsmodul (132) zum Speichern einer oder mehrerer Fähigkeiten der Vorrichtung.

4. Vorrichtung nach Anspruch 1, wobei Detektieren, dass die Gruppeneignervorrichtung (102) von der Peer-to-Peer-Drahtlosverbindung (104) getrennt ist, mindestens teilweise darauf basiert, dass die Vorrichtung eine Verlassensankündigungsnachricht (704) von der Gruppeneignervorrichtung (102) empfängt.

5. Vorrichtung nach Anspruch 1, wobei die Einsatzbereitschaftsanforderung (604) Folgendes umfasst:
eine Anforderung zum Bestätigen, ein Gruppeneignerkandidat zu werden; und
eine Anforderung für eine oder mehrere Vorrichtungsfähigkeiten.

6. Verfahren (200), umfassend:
Bereitstellen (202), durch ein Kommunikationsmodul einer Gruppeneignervorrichtung, einer Einsatzbereitschaftsanforderung (604), einer des einen oder der mehreren Gruppeneignerkandidaten für ein Peer-to-Peer-Drahtlosnetzwerk (100) zu werden;
Empfangen (204), durch das Kommunikationsmodul der Gruppeneignervorrichtung, einer oder mehrerer Antworten (606) auf die Einsatzbereitschaftsanforderung von einem oder mehreren Gruppenmitgliedern des Peer-to-Peer-Drahtlosnetzwerks (100);
Bestimmen, durch ein Einstufungsmodul der Gruppeneignervorrichtung, einer Einstufung 206 des einen oder der mehreren Gruppenmitglieder zum Auswählen eines Gruppeneigners (102) und eines oder mehrerer nachfolgender Gruppeneigner für das Peer-to-Peer-Drahtlosnetzwerk basierend auf einer Einstufung der Antworten auf die Einsatzbereitschaftsanforderungen; und
Einnehmen, durch ein Übergangsmodul einer Gruppeneignervorrichtung, einer Gruppeneignerrolle für das Peer-to-Peer-Drahtlosnetzwerk basierend auf der bestimmten Einstufung, wenn detektiert wird, dass eine Gruppeneignervorrichtung von dem Peer-to-Peer-Drahtlosnetzwerk getrennt ist;
wobei Detektieren, dass die Gruppeneignervorrichtung (102) von der Peer-to-Peer-Drahtlosverbindung getrennt ist, mindestens teilweise darauf basiert, dass die Vorrichtung die Gruppeneignerbake (614) nicht innerhalb eines Lieferzeitfensters empfängt.

7. Verfahren (200) nach Anspruch 6, ferner umfassend:
Liefern der Einstufung an das eine oder die mehreren Gruppenmitglieder (106);
Liefern einer Gruppeneignerverhandlungsnachricht an eine oder mehrere Vorrichtungen (106); und Auswählen eines Gruppeneigners (102) aus der einen oder den mehreren Vorrichtungen, zumindest teilweise basierend auf den Antworten auf die Gruppeneignerverhandlungsnachricht, wobei der Gruppeneigner (102) ein Zugangspunkt für das Peer-to-Peer-Drahtlosnetzwerk (100) ist.

8. Verfahren (200) nach Anspruch 6, ferner umfassend:
Liefern (612) der Einstufung an das eine oder die mehreren Gruppenmitglieder;
Liefern von Gruppeninformationen, umfassend Adresseninformationen und Formatanforderungen für Gruppendaten; und
Empfangen einer Bestätigung der Einstufung und der Formatanforderungen.

9. Verfahren (200) nach Anspruch 6, wobei die eine oder die mehreren Antworten auf die Einsatzbereitschaftsanforderung (604) eine Bestätigung, einer des einen oder der mehreren Gruppeneignerkandidaten zu werden, und eines oder mehrere der Folgenden umfassen:
Speicherfähigkeit;
Computerprozessorfähigkeit;
Batterieenergiekapazität;
Empfangssignalstärke;
Standort;
Bandbreitenfähigkeit;
Anwendungsfähigkeit;
Audiofähigkeit; oder
Videofähigkeit.

10. Verfahren (200) nach Anspruch 6, wobei der nachfolgende Gruppeneigner Einnehmen einer oder mehrerer Funktionen des Gruppeneigners umfasst, wenn der Gruppeneigner (102) für einen Zeitraum nicht verfügbar ist oder der Gruppeneigner eine Verlassensankündigungsnachricht liefert, die eine Angabe umfasst, dass der Gruppeneigner das Peer-to-Peer-Drahtlosnetzwerk (100) verlassen möchte.

11. Verfahren (200) nach Anspruch 6, wobei die Einstufung zumindest teilweise auf dem Folgenden basiert:
eine Bestätigung, einer des einen oder der mehreren Gruppeneignerkandidaten zu werden;
Speicherfähigkeit;
Computerprozessorfähigkeit;
Batterieenergiekapazität;
Bandbreitenfähigkeit;
Anwendungsfähigkeit;
Audiofähigkeit; oder
Videofähigkeit.

12. Greifbares computerlesbares Speichermedium oder mehrere greifbare computerlesbare Speichermedien, die computerausführbare Anweisungen umfassen, die betreibbar sind zum, wenn durch mindestens einen Computerprozessor ausgeführt, Befähigen des mindestens einen Computerprozessors, ein Verfahren nach einem der Ansprüche 6 bis 11 durchzuführen.

13. System, umfassend:
mindestens einen Speicher, der computerausführbare Anweisungen speichert;
mindestens eine Drahtlosnetzwerkschnittstellenvorrichtung;
mindestens einen Prozessor, der ausgelegt ist zum Zugreifen auf die mindestens eine Drahtlosnetzwerkschnittstellenvorrichtung und den mindestens einen Speicher und zum Ausführen der computerausführbaren Anweisungen;
und die Vorrichtung nach Anspruch 1.

14. System nach Anspruch 13, ferner umfassend:
ein Gruppendatenmodul (130) zum Speichern von Adressierinformationen und Berechtigungen der Vorrichtung und der Adressierinformationen, Berechtigungen und nachfolgenden Gruppeneignereinstufung der einen oder der mehreren Vorrichtungen unter Verwendung der Peer-to-Peer-Drahtlosverbindung; und
ein Konfigurationsmodul (132) zum Speichern einer oder mehrerer Fähigkeiten der Vorrichtung.

## Revendications

1. Dispositif comprenant :
un module de communication sans fil pour permettre une connexion sans fil de poste à poste (104) avec un ou plusieurs autres dispositifs (106) pour envoyer des demandes de disponibilité (604) sur la connexion sans fil de poste à poste (104) et pour recevoir des réponses (606) aux demandes de disponibilité ;
un module de classement (126) pour classer les réponses aux demandes de disponibilité, pour sélectionner un propriétaire de groupe (102) pour la connexion sans fil de poste à poste (126) et pour sélectionner un ou plusieurs propriétaires de groupe ultérieurs pour la connexion sans fil de poste à poste en se basant, au moins en partie, sur le classement ; et
un module de transition (128) pour assumer un rôle de propriétaire de groupe pour la connexion sans fil de poste à poste en se basant sur la sélection de ou des propriétaires de groupe ultérieurs si le dispositif (102) détecte qu'un dispositif de propriétaire de groupe est déconnecté de la connexion sans fil de poste à poste ;
dans lequel la détection que le dispositif de propriétaire de groupe (102) est déconnecté de la connexion sans fil de poste à poste est basée, au moins en partie, sur le dispositif qui ne reçoit pas la balise de propriétaire de groupe (614) dans une fenêtre de temps de distribution.

2. Dispositif selon la revendication 1, dans lequel le module de transition (128) renonce au rôle de propriétaire de groupe pour le dispositif de propriétaire de groupe si le dispositif (102) reçoit une balise de propriétaire de groupe en provenance du dispositif de propriétaire de groupe (102).

3. Dispositif selon la revendication 1, comprenant en outre :
un module de données de groupe (130) pour stocker des informations d'adressage et des justificatifs d'identité du dispositif et les informations d'adressage, les justificatifs d'identité et le classement de propriétaire de groupe ultérieur du ou des dispositifs utilisant la connexion sans fil de poste à poste ; et
un module de configuration (132) pour stocker une ou plusieurs capacités du dispositif.

4. Dispositif selon la revendication 1, dans lequel la détection que le dispositif de propriétaire de groupe (102) est déconnecté de la connexion sans fil de poste à poste (104) est basée, au moins en partie, sur le dispositif qui reçoit un message d'annonce de départ (704) en provenance du dispositif de propriétaire de groupe (102).

5. Dispositif selon la revendication 1, dans lequel la demande de disponibilité (604) comprenant :
une demande d'accusé de réception devenant un candidat de propriétaire de groupe ; et
une demande pour une ou plusieurs capacités de dispositif.

6. Procédé (200) consistant :
à fournir (202), au moyen d'un module de communication d'un dispositif de propriétaire de groupe, une demande de disponibilité (604) pour devenir un ou plusieurs candidats de propriétaire de groupe pour un réseau sans fil de poste à poste (100) ;
à recevoir (204), au moyen du module de communication du dispositif de propriétaire de groupe, une ou plusieurs réponses (606) à la demande de disponibilité en provenance d'un ou de plusieurs membres de groupe du réseau sans fil de poste à poste (100) ;
à déterminer, au moyen d'un module de classement du dispositif de propriétaire de groupe, un classement (206) du ou des membres de groupe pour sélectionner un propriétaire de groupe (102) et un ou plusieurs propriétaires de groupe ultérieurs pour le réseau sans fil de poste à poste en se basant sur un classement des réponses aux demandes de disponibilité ; et
à assumer, au moyen d'un module de transition d'un dispositif de membre de groupe, un rôle de propriétaire de groupe pour le réseau sans fil de poste à poste en se basant sur le classement déterminé lorsqu'il est détecté qu'un dispositif de propriétaire de groupe est déconnecté du réseau sans fil de poste à poste ;
dans lequel la détection que le dispositif de propriétaire de groupe (102) est déconnecté de la connexion sans fil de poste à poste est basée, au moins en partie, sur le dispositif qui ne reçoit pas la balise de propriétaire de groupe (614) dans une fenêtre de temps de distribution.

7. Procédé (200) selon la revendication 6, consistant en outre :
à fournir le classement au ou aux membres de groupe (106) ;
à fournir un message de négociation de propriétaire de groupe à un ou plusieurs dispositifs (106) ; et à sélectionner un propriétaire de groupe (102) à partir du ou des dispositifs en se basant, au moins en partie, sur les réponses au message de négociation de propriétaire de groupe, le propriétaire de groupe (102) étant un point d'accès pour le réseau sans fil de poste à poste (100).

8. Procédé (200) selon la revendication 6, consistant en outre :
à fournir (612) le classement au ou aux membres de groupe ;
à fournir des informations de groupe comportant des informations d'adresse et des exigences de format pour des données de groupe ; et
à recevoir un accusé de réception du classement et des exigences de format.

9. Procédé (200) selon la revendication 6, dans lequel la ou les réponses à la demande de disponibilité (604) comprennent un accusé de réception pour devenir soit le ou les candidats de propriétaire de groupe, soit :
la capacité de mémoire ; et/ou
la capacité de processeur d'ordinateur ; et/ou
la capacité de puissance de batterie ; et/ou
la puissance du signal reçu; et/ou
la localisation ; et/ou
la capacité de largeur de bande ; et/ou
la capacité d'application ; et/ou
la capacité audio ; et/ou
la capacité vidéo.

10. Procédé (200) selon la revendication 6, dans lequel le propriétaire de groupe ultérieur consiste à assumer une ou plusieurs fonctions du propriétaire de groupe si le propriétaire de groupe (102) est indisponible pendant une période de temps ou si le propriétaire de groupe fournit un message d'annonce de départ comportant une indication que le propriétaire de groupe veut quitter le réseau sans fil de poste à poste (100).

11. Procédé (200) selon la revendication 6, dans lequel le classement est basé, au moins en partie, sur ce qui suit :
un accusé de réception pour devenir le candidat de groupe ou l'un des candidats de groupe ;
la capacité de mémoire ;
la capacité de processeur d'ordinateur ;
la capacité de puissance de batterie ;
la puissance de largeur de bande ;
la capacité d'application ;
la capacité audio ; ou
la capacité vidéo.

12. Un ou plusieurs supports de stockage tangibles lisibles par ordinateur comprenant des instructions pouvant être exécutées par un ordinateur utilisables, lorsqu'elles sont exécutées par au moins un processeur d'ordinateur, pour permettre au ou aux processeurs d'ordinateur de mettre en oeuvre un procédé selon l'une quelconque des revendications 6 à 11.

13. Système comprenant :
au moins une mémoire stockant des instructions pouvant être exécutées par un ordinateur ;
au moins un dispositif d'interface réseau sans fil ;
au moins un processeur configuré pour avoir accès au ou aux dispositifs d'interface réseau sans fil et à la ou aux mémoires et pour exécuter les instructions pouvant être exécutées par un ordinateur ;
et le dispositif selon la revendication 1.

14. Système selon la revendication 13, comprenant en outre :
un module de données de groupe (130) pour stocker des informations d'adressage et des justificatifs d'identité du dispositif et les informations d'adressage, les justificatifs d'identité et le classement de propriétaire de groupe ultérieur du ou des dispositifs utilisant la connexion sans fil de poste à poste ; et
un module de configuration (132) pour stocker une ou plusieurs capacités du dispositif.
